# EUROPEAN PATENT APPLICATION

(11) **EP 3 217 289 A2**
(43) Date of publication of application: **13.09.2017**
(21) Application number: 17159439.3
(22) Date of filing: 06.03.2017
(51) Int. Cl.: G06F 12/0864, G06T 1/60, G06F 12/0875

(54) **SYSTEM AND METHOD FOR PREVENTING CACHE CONTENTION**

(30) Priority: 07.03.2016 US 201615062436
(71) Applicant: Ceva D.S.P. Ltd., 4673302 Herzlia Pituach (IL)
(72) Inventor: Rohe, Amos, 6424525 Tel Aviv (IL); Sadeh, Roni, 4444615 Kfar Saba (IL)
(74) Representative: Pearl Cohen Zedek Latzer Baratz UK LLP

(57) **Abstract**

A system and method for preventing cache contention for a cache including a plurality of ways and a separate port for each way, the method including: obtaining, in a core of a processor, a multidimensional coefficient array of a multidimensional filter, and pointers to data elements from a plurality of rows of a multidimensional data array, and loading the plurality of rows into the cache, where each row is stored in a different way of the cache.

## Description

### FIELD OF THE INVENTION

The present invention relates generally to the field of cache memory management, and more particularly, to a method for preventing cache contention for a multi-way cache.

### BACKGROUND

When performing parallel loads or read operations from a cache memory device, e.g., when data elements required or which are inputs for performing a single operation are located in more than one cache line, there is a chance for a memory contention which may halt the core. Thus, the core may halt and wait for data even in a case of a cache hit. For example, data located in the memory may be loaded into more than one cache lines.

Prior art solutions are known in which data may be arranged according to an a priori knowledge of the data structure to minimize contentions in multi-port memory devices that are not cache memory devices, e.g., multi-port random access memory (RAM), tightly-coupled memory (TCM), etc. According to one solution, memory locations may be left empty so that data elements required for a single cycle of a filter or other operations would not reside in the same memory bank. Thus, when reading the required data elements, data elements may be read using the plurality of ports of the memory device, with no contentions. While this arrangement eliminates or reduces memory contentions, it has some serious drawbacks. One disadvantage of this method is that it causes a waste of memory space, since memory locations are left empty. Another disadvantage is the lack of flexibility. This arrangement suits only a particular type of filter or other operation. If a second type of filter having a different structure has to be performed on the same data, memory contentions may occur. Thus, the second filter may require a second and different arrangement of the data in the memory, which may not fit the first filter. A second solution involves placing different data sets that are required for performing a single cycle of a filter in different memory blocks, and reading the required data in a single read cycle with no contentions. This solution lacks flexibility as well.

### SUMMARY OF THE INVENTION

According to embodiments of the present invention, there is provided a method for preventing cache contention for a cache including a plurality of ways and a separate port for each way, the method may include: obtaining, in a core of a processor, a multidimensional coefficient array of a multidimensional filter, and pointers to data elements from a plurality of rows of a multidimensional data array; and loading the plurality of rows into the cache, wherein each row is stored in a different way of the cache.

Furthermore, according to embodiments of the present invention, the plurality of rows may be used for performing a single step of the multidimensional filter.

Furthermore, according to embodiments of the present invention, the multidimensional data array may be a two-dimensional data array representing an image, and data elements of the two-dimensional data array may be components of pixels of the image.

Furthermore, according to embodiments of the present invention, performing the multidimensional filter may include performing a sliding window operation.

Furthermore, according to embodiments of the present invention, the method may include: reading, by the core, the data elements required for performing one of a plurality of steps of the multidimensional filter in parallel from the ways of the cache.

Furthermore, according to embodiments of the present invention, the method may include: extracting a stride length based on addresses of non-consecutive data elements required for performing a single step of the multidimensional filter, wherein loading the plurality of rows is performed based on the stride length.

Furthermore, according to embodiments of the present invention, the stride length may equal the length the data array.

Furthermore, according to embodiments of the present invention, consecutive rows are stored in different ways.

According to embodiments of the present invention, there is provided a method for preventing cache contention for a cache including a plurality of ways and a separate port for each way, the method may include: obtaining, in a core of a processor, a request for performing a multi-operation, and pointers to a plurality of vectors that are required for performing the multi-operation; and loading the plurality of vectors required for the multi-operation into the cache, wherein each vector is stored in a different way of the cache.

Furthermore, according to embodiments of the present invention, the method may include: reading, by the core, the vectors required for performing the multi-operation in parallel from the different ways of the cache.

Furthermore, according to embodiments of the present invention, the method may include: reading, by the core, other vectors subsequent to the plurality of vectors required for performing the multi-operation in parallel from the different ways of the cache.

Furthermore, according to embodiments of the present invention, the method may include: extracting a stride length based on addresses of the vectors, where loading the plurality of vectors is performed based on the stride length.

According to embodiments of the present invention, there is provided a system, the system may include: a memory; a cache including a plurality of ways and a separate port for each way of the cache; and a core configured to: obtain a multidimensional coefficient array of a multidimensional filter, and pointers to data elements from a plurality of rows of a multidimensional data array; and load the plurality of rows from the memory into the cache, where each row is stored in a different way of the cache.

Furthermore, according to embodiments of the present invention, the plurality of rows may be used for performing a single step of the multidimensional filter.

Furthermore, according to embodiments of the present invention, the multidimensional data array may be a two-dimensional data array representing an image, and the data elements of the two-dimensional data array may be components of pixels of the image.

Furthermore, according to embodiments of the present invention, the multidimensional filter may include a sliding window operation.

Furthermore, according to embodiments of the present invention, the core may be further configured to: read the data elements required for performing one of a plurality of steps of the multidimensional filter in parallel from the different ways of the cache.

Furthermore, according to embodiments of the present invention, the core may be further configured to: extract a stride length based on addresses of non-consecutive data elements required for performing the single step of the multidimensional filter, where loading the plurality of rows is performed based on the stride length.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is schematic illustration of an exemplary device according to embodiments of the invention;
Fig. 2A depicts an example of a two-dimensional data array helpful in understanding embodiments of the present invention;
Fig. 2B depicts an example of a two-dimensional coefficients array helpful in understanding embodiments of the present invention;
Figs. 2C-2E depict the two-dimensional data and coefficients arrays in three different steps of performing the operation for demonstrating embodiments of the present invention;
Fig. 3 depicts an exemplary two way cache storing a two-dimensional data array according to embodiments of the present invention;
Fig. 4 depicts an exemplary H-way cache storing of a multidimensional data array, according to embodiments of the present invention;
Fig. 5 depicts an exemplary four-way cache storing data elements for multi-operation, according to embodiments of the present invention;
Fig. 6 is a flowchart diagram illustrating a method for preventing cache contention for a multi-way cache when performing a multidimensional filter, according to embodiments of the present invention; and
Fig. 7 is a flowchart diagram illustrating a method for preventing cache contention for a multi-way cache when performing a multi-operation, according to embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

Embodiments of the present invention provide methods for preventing cache contention when loading data elements from a cache memory into a processor core. As used herein the term data element may refer to a single datum, or a single value, stored in a specific location or address in memory. Embodiments of the method may be used as a preparation step when performing multidimensional filters, including for example two-dimensional (2D) or higher dimensional filters, sliding windows operations, Harris Corner Detector, 2D correlation, 2D convolution, Gaussian Filter, Kanade-Lucas-Tomasi (KLT) feature tracker, Nagao Matsuyama filter, algorithms that require the sum of absolute differences, Sobel Filter, Fourier transform, etc. As used herein a multidimensional filter may refer to performing an operation on a selection or a "window" of data elements of a data set or a data array and moving, shifting or sliding the window across the data elements of the data array according to a predetermined pattern, each time performing the operation on the selected data. As used herein, a step of a multidimensional filter may refer to performing the operation on the selected data elements. The movement of the window may be virtual, or a data construct. For example, a sliding window operation may include sliding the window across an array of data elements, at a raster scan. Embodiments of the method may be used for performing multi-operations between various data sets as disclosed herein. As used herein, a multi-operation may refer to a plurality of operations between vectors of operands that are performed in parallel.

Embodiments of the present invention may be utilized for filtering uncompressed image data. For multidimensional uncompressed video or image data, each data element may have a value uniquely associated with a single pixel in an image or video frame. For example, a data element may refer to a single pixel value or pixel component value (for example, a value of either the luma, Y', or the chrominance, U or V in a YUV color model, or the red, green and blue pixel values in the red green blue (RGB) color model in a single image frame. Embodiments of the present invention, however, are not limited to image processing, and data elements may represent any desired quantity or type of data. Embodiments of the present invention may be used for other fields, including but not limited to communication, audio processing or any type of data processing, etc.

Data elements of arrays that are loaded into a cache according to embodiments of the present invention may include any data type, including but not limited to bits, bytes, words of any type, 32-bit words, 64- bit words, integers, complex numbers, etc.

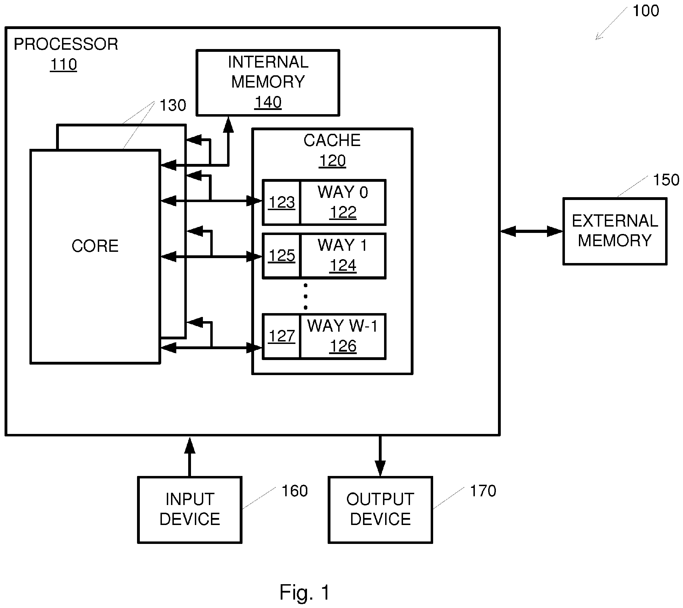

Reference is made to Fig. 1, which is a schematic illustration of an exemplary device according to embodiments of the invention. A device 100 may include any digital device such as a computer device, a video or image capture or playback device, a cellular telephone, a smartphone, a personal digital assistant (PDA), a video game console, etc. Device 100 may include any device capable of executing a series of instructions, for example to process multidimensional data, such as, video, image, or audio data. Device 100 may include an input device 160 such as a mouse, a keyboard, a microphone, a camera, a Universal Serial Bus (USB) port, a compact-disk (CD) reader, any type of Bluetooth input device, etc., for providing multidimensional data such as video, image or audio data, and other input, and an output device 170 such as a monitor, a projector, a screen, a printer, speakers, or a display, for displaying multidimensional data such as video, image or audio data on a user interface according to a sequence of instructions executed by processor 110. Other devices not including such input and output devices may be used.

Device 100 may include a processor 110. Processor 110 may include or may be a vector processor, a central processing unit (CPU), a digital signal processor (DSP), a microprocessor, a controller, a chip, a microchip, a field-programmable gate array (FPGA), an application-specific integrated circuit (ASIC) or any other integrated circuit (IC), or any other suitable multi-purpose or specific processor or controller.

Device 100 may include an external memory unit 150, an internal memory unit 140 and multi-way cache 120. Internal memory unit 140 may be a memory unit directly accessible to or internal to (physically attached or stored within) processor 110. Internal memory unit 140 may be a short-term memory unit, external memory unit 150 may be a long-term and/or short-term memory unit. Internal memory unit 140 and external memory unit 150 may include, for example, random access memory (RAM), dynamic RAM (DRAM), flash memory, cache memory, volatile memory, non-volatile memory or other suitable memory units or storage units. Internal memory unit 140 and external memory unit 150 may be implemented as separate (for example, "off-chip") or integrated (for example, "on-chip") memory units. For example, internal memory unit 140 may include a tightly-coupled memory (TCM), a buffer, or a cache, such as, an L-1 cache, an L-2 cache. Other or additional memory architectures may be used.

Processor 110 may include a single or a plurality of execution units or cores 130. Each core 130 may include, for example, one or more arithmetic units. Processor 110 may request, retrieve, and process data from external memory unit 150 and/or internal memory unit 140 and/or multi-way cache 120, and may control, in general, the pipeline flow of operations or instructions executed on the data. Processor 110 may receive an instruction, for example, from a program memory (for example, in external memory unit 150 or internal memory 140) to filter or perform a sliding window operation on a multidimensional data array. In one example, the instruction may filter or perform other sliding window operations on an image by sliding a window of coefficients of a filter over a multidimensional data array representing, for example, pixel values or components of pixel values of a region of an image. According to embodiments of the present invention, processor 110 may receive an instruction to execute a multi-operation. Processor 110 may receive an instruction to load data, e.g., of a data array, to a memory relatively more internal or accessible to processor 110, for example, from external memory unit 150 or internal memory 140 to multi-way cache 120, or from multi-way cache 120 to any of cores 130. In other embodiments different sets of and configurations of memory and cache units and execution units may be used.

According to embodiments of the present invention, dedicated instructions may be used by processor 110 to load data into multi-way cache 120, or from multi-way cache 120 into core or cores 130, for the multidimensional filter or multi-operation described herein. For example, a dedicated instruction may provide as inputs the data array containing sequential data elements and the coefficients array. The instruction may cause processor 110 to load elements of the data array into multi-way cache 120 as disclosed herein. Other dedicated instructions may provide as inputs the data elements required for or which are inputs to the multi-operation. The instruction may cause processor 110 to load the data elements into multi-way cache 120 as disclosed herein. Other instructions and input parameters may be used.

Thus, processor 110 may be configured to receive, for example, from a program memory (e.g., in external memory unit 150 or internal memory 140), an instruction to execute a multidimensional filter operation according to embodiments of the present invention. The instruction may include a coefficient array containing *N* coefficients and a data array containing data elements. Processor 110 may load the data elements from external memory 150 or internal memory unit 140 and store the loaded data elements in multi-way cache 120. Each core 130 may be configured to load data elements from multi-way cache 120 and perform a multidimensional filter. The instruction may return the results of the arithmetic operations as an output vector. As used herein, a vector may refer to a one-dimensional (1D) array of data elements.

Multi-way cache 120, also referred to as multi-port cache or cache, may include a plurality *W* of data sets also referred to as ways 122, 124, 126. Each way 122, 124, 126 may be connected to core or cores 130 by a separate port 123, 125, 127. For example, port 123 may enable read and write operations from or to way 0 122, port 124 may enable read and write operations from or to way *1* 124, etc. The separate ports 123, 125, 127 may enable parallel (e.g., at the same clock cycles, at the same time or substantially at the same time) reading and writing from each way 122, 124, 126 of the multi-way cache 120. Data elements may be arranged in lines in each way 122, 124, 126 of cache 120. If data is requested for processing by core 130, for example for a multidimensional filtering operation or for a multi-operation, the required or input data is first searched for in multi-way cache 120. In case of a cache hit, e.g., if the required data is found in multi-way cache 120, a block of data elements equal in number to the width of each way may be loaded from each way 122, 124, 126 of cache 120 in to core 130. Thus, data elements may be read from way 0 122, way *1* 124 up to way *W*-*1* 126 through ports 123, 125 and 127, respectively, in a single read cycle. As used herein, a load or read cycle may refer to retrieving data from the cache, including fetching the data elements from the cache, and storing the fetched data elements in core 130, for example, in internal registers. If the required data is not found in multi-way cache 120, the required data may be loaded to multi-way cache 120, for example, from other cache levels or from external memory unit 150. Data may be loaded in chunks of fixed size referred to as cache lines. Each chunk may be stored in a cache line of a selected way 122, 124, 126 of multi-way cache 120. According to embodiments of the present invention, a way 122, 124, 126 for storing each loaded chunk of data may be selected based on information related to the structure of the data and the nature of the operation, to reduce or eliminate contentions.

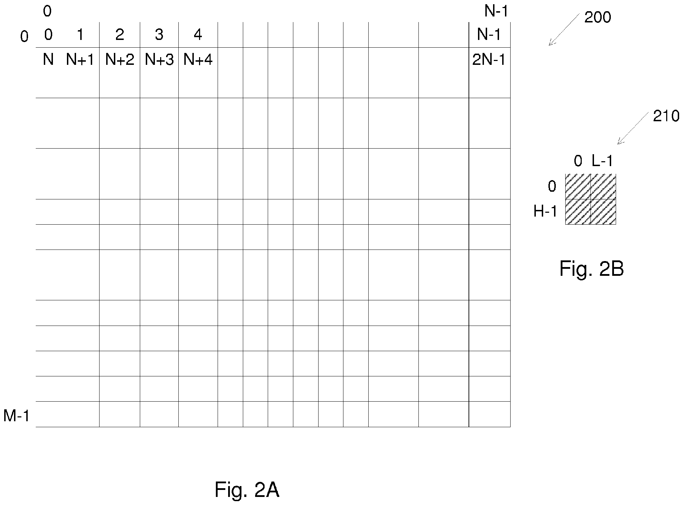

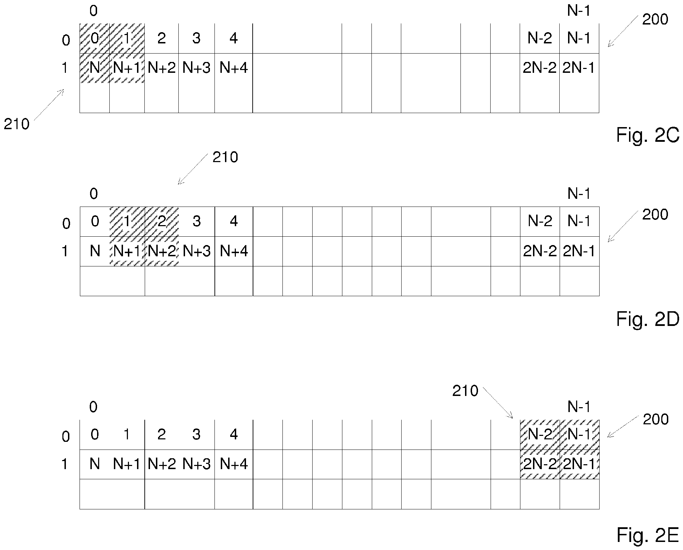

Reference is now made to Fig. 2A which depicts an example of two-dimensional data array 200, to Fig. 2B which depicts an example of two-dimensional coefficients array 210 and to Figs. 2C-2E which depicts the two-dimensional data and coefficients arrays in three different steps of performing a multidimensional filter, in this example, a sliding window operation. The non-limiting example depicted in Fig. 2A includes a 2D array 200 of data elements. Data array 200 may include or represent an image or a part of an image or any other array of data. For example, data elements of data array 200 may include pixels or components of pixels of an image. The non-limiting example depicted in Fig. 2B includes a 2D coefficients array 210 of a filter. The a filter may include any suitable type of two-dimensional or higher dimensional filters, sliding window operations, Harris Corner Detector, 2D correlation, 2D convolution, Gaussian Filter, Kanade-Lucas-Tomasi (KLT) feature tracker, Nagao Matsuyama filter, algorithms that require the sum of absolute differences, Sobel Filter, etc.

In the present example, data array 200 includes *M* rows by *N* columns, and coefficients array 210 includes *H* rows by *L* columns. Throughout the application, the number of rows of an array may be referred to as the array height, and the number of columns of the array may be referred to as the array width or length. It should be noted that the example of Figs. 2A-2E is not limiting and is presented for helping in understanding embodiments of the present invention. Embodiments of the present intention are not limited to any specific size of data array 200 or coefficients array 210 and are applicable to any suitable size of data and coefficients arrays. Additionally, same principles may apply to multidimensional arrays of higher dimensions, e.g., three-dimensional arrays and filters.

In the Example of Figs. 2C-2E the height and the width of the coefficients array equal two, *H*=*L*=*2*. Fig. 2C presents a first step of performing the multidimensional filter, in which coefficients of coefficient array 210 operate on data elements No. 0-1 of a first row of data array 200 and data elements No. *N* and *N*+*1* of a second row of data array 200. Fig. 2D presents a second step of performing the multidimensional filter, in which coefficients of coefficient array 210 slide one step to the right and operate on data elements No. 1-2 of a first row of data array 200 and data elements No. *N*+*1* and *N*+*2* of a second row of data array 200. Fig. 2E presents a last step of performing the multidimensional filter on the first row, in which coefficients of coefficients array 210 operate on data elements No. *N-2* and *N-1* of a first row of data array 200 and data elements No. *2N-2* and *2N-1* of a second row of data array 200. It should be readily understood that while in Figs. 2C-2E the multidimensional filter operates on consecutive rows of array 200, embodiments of the present invention are not limited in this regard and may include multidimensional filters that operate on non-consecutive rows of array 200. Also, the filter shape is not limited a square shaped filter and may have any desirable shape or pattern, as required by the application.

In most but not all implementations, the size of each way 122, 124, 126 of multi-way cache 120 is much larger than a single row of a typical data array 200. In typical prior-art implementations, elements of data array 200 are loaded from external memory 150 into the cache and are stored sequentially and row after row, in a single way of the cache, moving to a different way if the current way is full. Thus, performing the first step of the multidimensional filter would require reading data elements No. 0-1 from one line of the cache and elements *N* and *N*+*1* form another line of the same way of the cache. Reading data from two lines of the same way of a cache requires two read cycles and thus creates cache contention. As used herein, a cache contention may refer to a situation in which more than a single read cycle is needed to read elements required for or which are inputs to an operation performed by the core, e.g., for a single operation or a single step of a multidimensional filter, or for a plurality of operations or steps that are performed in parallel. Similarly, cache contention may occur when writing results of a single operation requires more than a single write operation. Cache contentions are undesired since core 130 that reads the data, needs to wait more than a single read cycle, even in case of a cache hit. Since in many applications the core halts while waiting for the data, cache contentions may increase the time required for performing the operation and degrade the overall performance of the processor.

According to embodiments of the present invention, cache contentions may be eliminated or at least reduced by using information related to the structure of the data and the nature of the operation in order to store data loaded into the cache in different ways 122, 124, 126 (or cache sets), in a manner that would prevent cache contentions. For example, with reference to Figs. 2A-2E, the first row of data array 200 may be stored in one way of cache 120 while the second row of data array 200 may be stored in a different way of cache 120. Since cache 120 includes a dedicated read/write ports 123, 125, 127 for each way 122, 124, 126, reading data elements No. 0-1 from a first row of data array 200 and elements *N* and *N*+*1* form the second row of data array 200 may now be performed in a single read cycle, with no contentions, by reading in parallel from the different ways of cache 120.

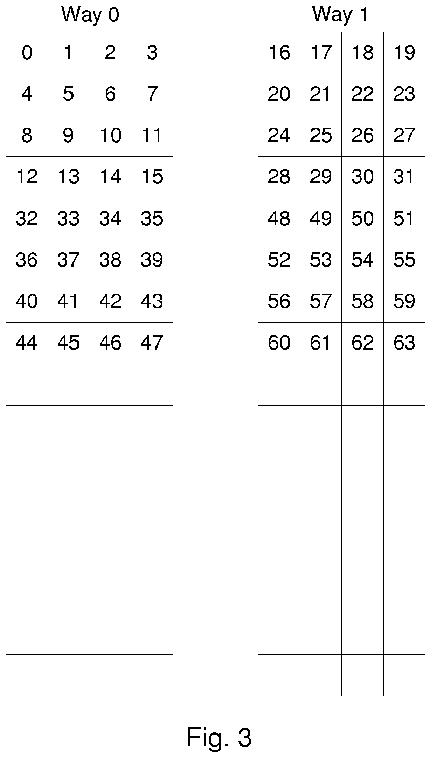

Reference is now made to Fig. 3 which depicts an exemplary two way cache storing elements of two-dimensional data array 200 according to embodiments of the present invention. In the example of Fig. 3 the line length of the data array equals 16, *N*=*16*. It can be seen that elements 0-15 of the first row of data array 200 are stored in way 0 of the two way cache, while elements 16-31 of the second row of data array 200 are stored in way 1 of the two way cache. Elements 32-47 of the third row of data array 200 are stored again in way 0 of the two way cache, while elements 48-63 of the fourth row of data array 200 are stored in way 1 of the two way cache. Thus, in a two way cache, consecutive rows of data array 200 are stored alternately in ways 0 and 1 of the cache.

The following is an example of pseudo code for filtering data array 200 with coefficients array 210 (other code and other languages may be used):
Load data elements (0 and 1) parallel to Load data elements (16 and 17)
Run filter
Load data elements (2 and 3) parallel to Load data elements (17 and 18)
Run filter
Load data elements (14 and 15) parallel to Load data elements (30 and 31)
Run filter
End

When executing the pseudo code above, if data elements of consecutive rows are located in different ways of the cache, parallel loads will take one read cycle, while if consecutive rows are located in a single way, cache contention may occur and the parallel loads may take two read cycles.

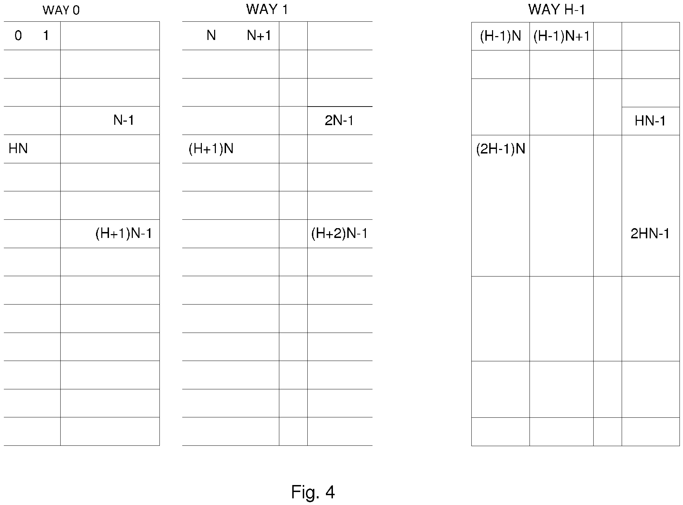

Reference is now made to Fig. 4 which depicts an exemplary H-way cache storing elements of multidimensional data array 200, according to embodiments of the present invention. In the example of Fig. 4 data array 200 includes *M* rows by *N* columns, and coefficients array 210 includes *H* rows by *L* columns. It can be seen that elements *0* to *N-1* of row no. 0 (the first row) of data array 200 are stored in way 0 of the H-way cache, elements *N* to *2N-1* of row no. 1 (the second row) of data array 200 are stored in way 1 of the H-way cache and so on. Elements (*H-1)N* to *HN-1* of row no. *H-1* (the *H^{th}* row) of data array 200 are stored in way *H-1* of the H-way cache. The next row may be stored again in way 0 and so on. Thus, data elements required to perform a single step of a multidimensional filter with coefficients array 210 may be read in a single read operation from ways 0 to *H-1* of the H-way cache.

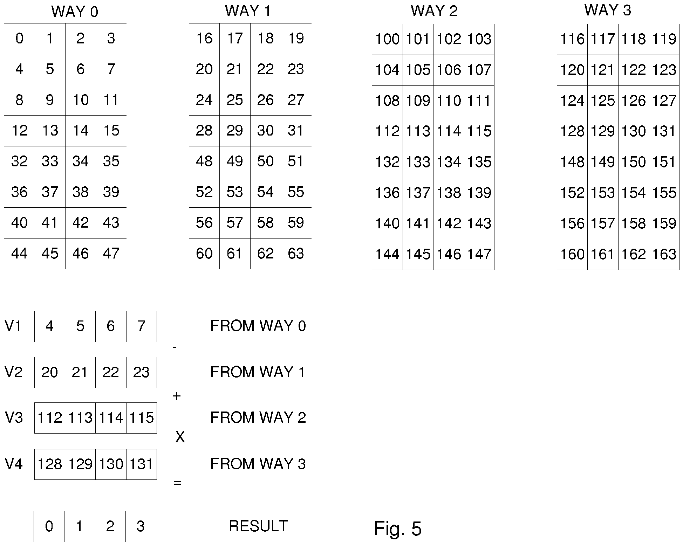

Reference is now made to Fig. 5 which depicts an exemplary four-way cache storing data elements for multi-operation according to embodiments of the present invention. In this example, data elements required for the multi-operation are stored in different ways of the cache (e.g., multi-way cache 120). The data elements presented in Fig. 5 may include data elements of an array, vectors of data elements, or any other data structure. For example, in Fig. 5 data elements of vector register V2 are subtracted from data elements of vector register V2, data elements of vector register V3 are multiplied by data elements of vector register V4 and the results of the multiplication and subtraction are added. Hence, data element no. 4 is added to data element no. 20 in parallel to adding data element no. 5 to data element no. 21, etc. This type of operation may be common in vector processors in which operations are performed in parallel on corresponding data elements of vectors. As can be seen in Fig. 5, data elements of the vectors required for the multi-operation are stored in different ways of the cache.

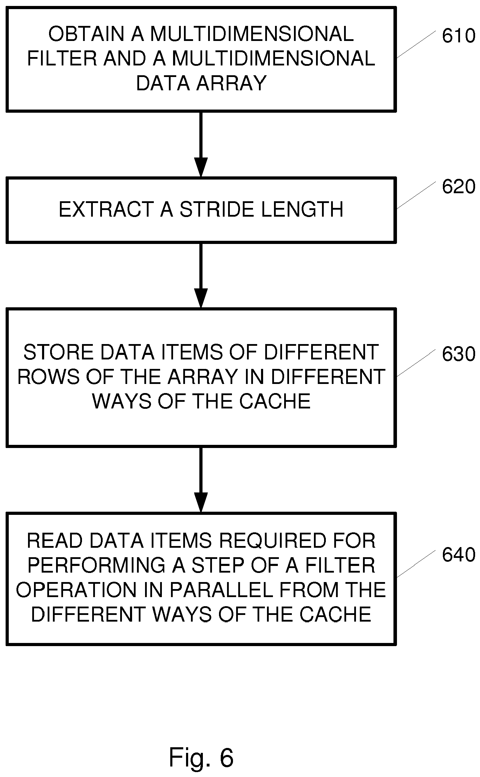

Reference is now made to Fig. 6, which is a flowchart diagram illustrating a method for preventing cache contention for a multi-way cache when performing a multidimensional filter, according to embodiments of the present invention. According to an embodiment, a method for preventing cache contention for a multi-way cache may be performed by any suitable processor and multi-way cache having a separate port for each way, for example, processor 110 and multi-way cache 120 depicted in Fig. 1. In some embodiments a method for preventing cache contention for a multi-way cache 120 may be initiated by a dedicated command or instruction.

In operation 610 a multidimensional coefficient array and a multidimensional data array may be obtained. For example, a core, such as one of cores 130, may receive pointers or addresses of the required data elements from a plurality of rows of a multidimensional data array and may attempt to load the elements required for a first step of a multidimensional filter, e.g., a sliding window operation, from the multi-way cache. In case the data array is not already stored in the multi-way cache, the first load would result in a cache miss. As used herein the term pointer may be used to indicate the location of data in the memory. A pointer may include the address of the data, a name of a register storing the address of the data, or any other information indicative of the location of the data in the memory.

In operation 620 a stride length may be extracted or calculated. As used herein a stride length may refer to difference between addresses of data elements required by the core that are separated by more than the size of a cache line. Typically, data elements that are separated by more than the size of a cache line would pertain to different rows of the data array. In some embodiments, the stride length may be extracted or calculated based on indices of leftmost elements of each row of the data array required for performing a single step of the multidimensional filter operation. In the example depicted in Fig. 2C, the leftmost elements of data array 200 required for performing a single step of the multidimensional filter are 0 and *N* and the stride length is therefore *N,* the array length. Thus, the stride length may be extracted based on a length of the data array and on the coefficients array, e.g., if the coefficients array is a square, the stride length may equal the length of the data array (e.g., the number of data elements in a single row of the array). In some embodiments, the stride length may be calculated based on addresses of non-consecutive data elements requested in a first parallel load that results in a cache miss. Returning to the pseudo code above, the first parallel load requires data elements (0 and 1) in parallel to data elements (16 and 17). Thus, in this example the non-consecutive data elements requested in a first parallel load are data elements no. 0 and 16. Thus, the stride length may equal 16-0=16. It should be noted that step 620 is optional (as are other steps in different embodiments). In some embodiments it may be not necessary to calculate a stride length.

In operation 630 data elements of different rows required by the filter may be loaded form the memory (e.g., external memory unit 150 or internal memory unit 140) and stored in different ways of the multi-way cache. For example, a single row of the data array may be stored in a single way, and rows required for a single step of the filter may be stored in different ways. In an embodiment, data elements of the data array that are separated by the stride length may be stored in different ways of the cache. Since data elements are loaded in chunks equal in size to a cache line, a single load operation to the cache would typically load data elements for a plurality of steps of the filter. Returning to the pseudo code above, the first parallel load for loading data elements (0 and 1) in parallel to data elements (16 and 17), would result in loading a first and a second rows into different ways of the cache, e.g., data elements 0-15 pertaining to a first row may be loaded to way *0* and data elements 16-31 pertaining to a second row may be loaded to way *1*, as presented in Fig. 3.

In operation 640 data elements required for performing a step of the multidimensional filter may be loaded in parallel, e.g., by and to a core of a processor, from the different ways of the cache through the multiple ports of the cache. This operation may be repeated as required to perform more steps of the filter with the data elements that were loaded to the multi-way cache. For example, returning to the pseudo code presented above, after loading data elements (0 and 1) in parallel to data elements (16 and 17), the entire first and second rows are loaded into the cache and the filter may be performed for elements 0-15 and 16-31 substantially without contentions and with no further loads from the memory. Similar principles may be used for writing the results of the multidimensional filter to the multi-way cache.

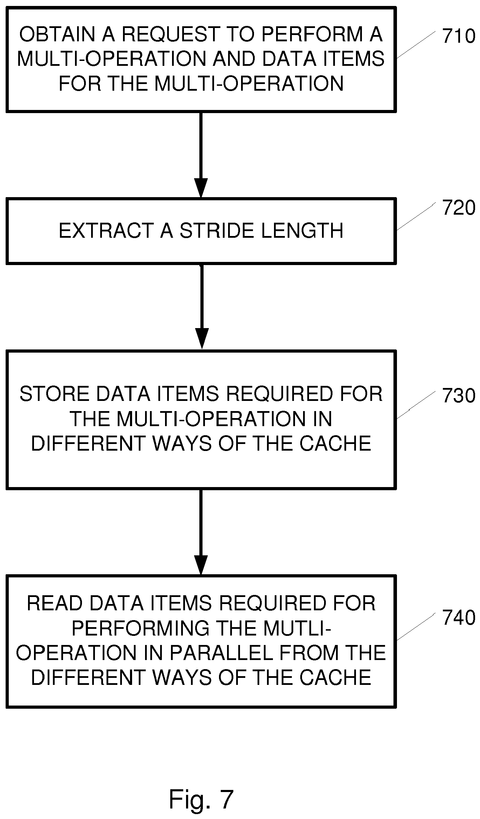

Reference is now made to Fig. 7, which is a flowchart diagram illustrating a method for preventing cache contention for a multi-way cache when performing a multi-operation, according to embodiments of the present invention. According to an embodiment, a method for preventing cache contention when performing a multi-operation may be performed by any suitable processor and multi-way cache having a separate port for each way, for example, processor 110 and multi-way cache 120 depicted in Fig. 1. In some embodiments a method for preventing cache contention for a multi-way cache 120 may be initiated by a dedicated command or instruction.

In operation 710 a request for performing a multi-operation, and pointers to the data, e.g., to a plurality of vectors that are required for performing the multi-operation, may be obtained, for example in the form of an instruction. For example, a core, such as one of cores 130, may attempt to load data elements required for the multi-operation, from the multi-way cache. In case the required data elements are not already stored in the multi-way cache, the first load would result in a cache miss. In operation 720 a stride length or a plurality of stride length parameters may be extracted. Here, the stride length may refer to the difference between indices of leftmost elements of the vectors required for performing the multi-operation. In the example depicted in Fig. 5, the leftmost elements required for performing the multi-operation are *4*, *20*, *112* and *128* and the stride length parameters are therefore *16, 92* and *16*. In some embodiments, the stride length may be calculated based on the addresses of non-consecutive data elements requested in a first parallel load that results in a caches miss. It should be noted that step 720 is optional (as with other steps). In some embodiments it may be not necessary to calculate a stride length.

In operation 730 data elements of different vectors or other data structures required by or used in the multi-operation may be loaded from the memory (e.g., external memory unit 150 or internal memory unit 140) and stored in different ways of the cache. For example, a vector may be stored in a single way, and vectors required for the multi-operation may be stored in different ways. In an embodiment, data elements that are separated by the stride length may be stored in different ways of the cache. In some embodiments a cache line may be configured to store a plurality of vectors. For example, each block of the cache line may store a vector and a cache line may include a plurality of blocks. Since data elements are loaded in chunks equal in size to a cache line, in some embodiments a single load operation to the cache would typically load data elements for a plurality of vectors.

In operation 740 data elements required for performing the multi-operation may be loaded in parallel, e.g., by and to a core of a processor, from the different ways of the cache through the multiple ports of the cache. For example, after loading vectors (4-7), (20-23), (112-115) and (128-131) in parallel, subsequent vectors, e.g., vectors that immediately follow vectors (4-7), (20-23), (112-115) and (128-131) in memory or vectors that are required for the next multi-operation, may be loaded or read from the multi-way cache to the core for performing more of the multi-operation, without contentions and with no further loads from the memory. Similar principles may be used for writing the results of the multidimensional filter to the multi-way cache.

According to embodiments of the present invention, data is placed in a multi-port cache device according to a priori knowledge of the data structure to minimize contentions. In some embodiments a solution is superior over prior art solutions using memory devices that are not cache memory devices (hereinafter "conventional memory devices"). Conventional memory devices use fixed addresses. Thus, a CPU has to access the exact addresses of the data elements of the data array in the conventional memory device to read the required data elements. Thus, changing the arrangement of the data in a conventional memory device would require changing of the addresses the CPU uses to access the data. This type of change may be cumbersome and may waste computing cycles. Thus, changing the arrangement of the data in the conventional memory device prior to performing a filter may reduce the overall performance of the CPU in comparison to arranging data according to embodiments of the present invention when loading data to a cache memory. Embodiments of the present invention may involve different arrangements of the data in the cache. The addresses of the data elements in the conventional memory device may not be affected by embodiments of the present invention. In some embodiments only the mapping between memory addresses and cache locations is affected. This may allow more flexibility and better adjustment capabilities to different filters, while the overall performance of the CPU may not be compromised.

While being especially beneficial for image processing and communication systems, the aforementioned embodiments of the invention can be efficiently used in any application that requires multidimensional filtering or multi-perations.

Embodiments of the invention may be implemented on an integrated circuit (IC), for example, core or cores 130, as well as other components of Fig. 1, may be implemented or included in an integrated chip or as a part of an chip, such as an ASIC, an FPGA, a CPU, a DSP, a microprocessor, a controller, a chip, a microchip, etc.

According to embodiments of the present invention, some units e.g., core or cores 130, as well as other components of Fig. 1, may be implemented in a hardware description language (HDL) design, written in Very High Speed Integrated Circuit (VHSIC) hardware description language (VHDL), Verilog HDL, or any other hardware description language. The HDL design may be synthesized using any synthesis engine such as SYNOPSYS® Design Compiler 2000.05 (DC00), BUILDGATES® synthesis tool available from, inter alia, Cadence Design Systems, Inc. An ASIC or other integrated circuit may be fabricated using the HDL design. The HDL design may be synthesized into a logic level representation, and then reduced to a physical device using compilation, layout and fabrication techniques, as known in the art.

Embodiments of the present invention may include a computer program application stored in non-volatile memory, non-transitory storage medium, or computer-readable storage medium (e.g., hard drive, flash memory, CD ROM, magnetic media, etc.), storing instructions that when executed by a processor ( e.g., processor 110) carry out embodiments of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method for preventing cache contention for a cache comprising a plurality of ways and a separate port for each way, the method comprising:
obtaining, in a core of a processor pointers to data elements from a plurality of rows of a multidimensional data array; and
loading the plurality of rows into the cache, wherein each row is stored in a different way of the cache.

2. The method of claim 1, wherein the multidimensional data array is a two-dimensional data array representing an image, and wherein data elements of the two-dimensional data array are components of pixels of the image.

3. The method of claim 1 or claim 2, wherein the plurality of rows are used for performing a single step of a multidimensional filter.

4. The method of claim 3, wherein performing the multidimensional filter comprises performing a sliding window operation.

5. The method of claim 3 or claim 4, further comprising:
reading, by the core, the data elements required for performing one of a plurality of steps of the multidimensional filter in parallel from the ways of the cache.

6. The method of claim 3, 4 or 5, further comprising:
extracting a stride length based on addresses of non-consecutive data elements required for performing a single step of the multidimensional filter,
wherein loading the plurality of rows is performed based on the stride length.

7. The method of claim 6, wherein the stride length equals the length the multidimensional data array.

8. The method of claim 6 or claim 7, wherein consecutive rows are stored in different ways.

9. A method for preventing cache contention for a cache comprising a plurality of ways and a separate port for each way, the method comprising:
obtaining, in a core of a processor, a request for performing a multi-operation, and pointers to a plurality of vectors that are required for performing the multi-operation; and
loading the plurality of vectors required for the multi-operation into the cache, wherein each vector is stored in a different way of the cache.

10. The method of claim 9, further comprising:
reading, by the core, the vectors required for performing the multi-operation in parallel from the different ways of the cache.

11. The method of claim 10, further comprising:
reading, by the core, other vectors subsequent to the plurality of vectors required for performing the multi-operation, in parallel from the different ways of the cache.

12. The method of claim 9, 10 or 11, further comprising:
extracting a stride length based on addresses of the vectors,
wherein loading the plurality of vectors is performed based on the stride length.

13. A system comprising:
a memory;
a cache comprising a plurality of ways and a separate port for each way of the cache; and
a core configured to implement the steps of the method of any preceding claim.
